(19) Europäisches Patentamt
European Patent Office
Office européen des brevets

(11) Publication number : **0 360 297 B1**

(12) # EUROPEAN PATENT SPECIFICATION

(45) Date of publication of patent specification : **10.02.93 Bulletin 93/06**

(51) Int. Cl.$^5$ : **C08F 10/00,** C08F 4/649

(21) Application number : **89118203.2**

(22) Date of filing : **17.06.87**

(54) **Olefin polymerization catalyst.**

(30) Priority : **17.06.86 US 875180**
**28.05.87 US 55430**

(43) Date of publication of application :
**28.03.90 Bulletin 90/13**

(60) Publication number of the earlier application in accordance with Art. 76 EPC : **0 250 230**

(45) Publication of the grant of the patent :
**10.02.93 Bulletin 93/06**

(84) Designated Contracting States :
**AT BE CH DE ES FR GB IT LI LU NL SE**

(56) References cited :
**EP-A- 0 171 179**
**FR-A- 2 392 037**
**US-A- 4 540 679**

(73) Proprietor : **AMOCO CORPORATION**
**200 East Randolph Drive**
**Chicago Illinois 60601 (US)**

(72) Inventor : **Arzoumanidis, Gregory Gerasimos**
**7 S 610 Carriage Way**
**Naperville Illinois 60540 (US)**
Inventor : **Johnson, Bryce Vincent**
**580 North Arm Drive**
**Mound Minnesota 55364 (US)**
Inventor : **Karayannis, Nicholas Marios**
**15 Pebblewood Trail**
**Naperville Illinois 60540 (US)**
Inventor : **Khelghatian, Habet M.**
**1540 Kildeer Drive**
**Naperville Illinois 60565 (US)**
Inventor : **Lee, Sam Soksoon**
**555 Edgemont Lane**
**Hoffman Estates Illinois 60195 (US)**

(74) Representative : **Ritter, Stephen David et al**
**Mathys & Squire 10 Fleet Street**
**London EC4Y 1AY (GB)**

**EP 0 360 297 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the Invention

This invention relates to catalyst systems useful for polymerizing alpha-olefins and particularly relates to a supported titanium halide catalyst component and a catalyst system containing such component.

Magnesium-containing supported titanium halide-based alpha-olefin polymerization catalyst components are now well known in the art. Typically, these catalysts are recognized for their performance based on activity and stereospecificity. However, commercial olefin polymerization, especially gas-phase alpha-olefin polymerization, requires additional catalyst attributes for economical large-scale operation. Specifically, polymer morphology, typically dependent upon catalyst morphology, many times is critical. Included in good polymer morphology is uniformity of particle size and shape, resistance to attrition and an acceptably high bulk density. Minimization of very small particles (fines) typically is very important, especially in gas-phase polymerization to avoid transfer or recycle line pluggage. Very large particles also must be avoided to minimize formation of lumps and strings in the reactor.

A suitable catalyst should produce a polymer with minimum particles having average diameter less than 150 μm (fines) or greater than 850 μm. Another property which is important commercially is maintenance of an acceptably high bulk density. Typically, this property is measured in pounds per cubic foot of polymer. One approach to improve morphology control as described in U.S. Patent 4,540,679 is to solubilize a magnesium species with carbon dioxide in an alcohol solvent. Although Example VI of this patent describes a high activity catalyst, its morphology needs improvement in that the catalyst produced too many fines.

The present invention incorporates a series of catalyst formation process steps which produce a catalyst with exceptionally high activity and stereospecificity combined with very good morphology.

Supported, magnesium-containing, titanium-containing, electron donor-containing olefin polymerization catalysts now are well known in the art. Use of carbon dioxide in preparing a magnesium-containing support has been described in the aforementioned U.S. Patent 4,540,679. Also, in a different context use of carbon dioxide was described in U.S. Patents 4,246,383; 2,244,838; 4,529,715; and 4,530,915. Treating alcoholic solutions and suspensions of alkaline earth alcoholates with carbon dioxide and sulfur dioxide was no.ted in Chemical Abstracts, Vol. 76, 853050v (1972). Forming a soluble magnesium species has been described in U.S. Patents 4,315,874; 4,399,054; 4,071,674; and 4,439,540. Examples of use of silicon compounds in formation of a catalyst component include U.S. Patents 4,071,672; 4,085,276; 4,220,554; and 4,315,835. Tetrahydrofuran (THF) has been described variously to complex a magnesium chloride species (e.g., U.S. Patents 4,482,687, 4,277,372, 3,642,746, and 3,642,772 and in European Patent 131,832); as a modifier in a cocatalyst (e.g., U.S. Patents 4,158,642 and 4,148,756); and as a solvent (e.g., U.S. Patents 4,477,639 and 4,518,706). However the specific combination of steps taught in this invention to produce a catalyst with extremely advantageous properties have not been disclosed.

US-A-4,540,679 describes compositions comprising a transition metal component and magnesium hydrocarbyl carbonate and a method for preparing same by reacting a suspension of magnesium alcoholate with carbon dioxide to form a magnesium hydrocarbyl carbonate and reacting magnesium hydrocarbyl carbonate with a transition metal component. For example, the magnesium hydrocarbyl carbonate support can be formed by suspending magnesium ethoxide in an alcohol medium, adding carbon dioxide until the magnesium ethoxide dissolves to form a solubilized magnesium species (magnesium ethyl carbonate) and precipitating magnesium ethyl carbonate reaction product from the solution as discrete spheres and/or oblong particles by treating with an anti-solvent, such as an alkyl aluminum compound or transition metal compound.

The invention described herein is based on a solubilized magnesium species such as described in US-A-4,540,679. It has been found that first forming a solid precipitate from such solubilized magnesium species with a titanium halide in the presence of an organosilane produces a precipitate with a uniform particle size.

According to the present invention there is thus provided a solid, hydrocarbon-insoluble alpha-olefin polymerization catalyst component which comprises a product formed by precipitating solid particles from a magnesium hydrocarbyl carbonate solution in an alcohol by treatment with titanium tetrachloride and an organosilane and treating the resulting solid particles with titanium tetrachloride and an electron donor.

As described in more detail in our EP 0 250 231B, it has been found that the catalyst component of the invention may be improved by reprecipitating the solid precipitate formed as described above from a solution containing a cyclic ether such as tetrahydrofuran (THF). The reprecipitate solid particles have a narrow particle size distribution and form a catalyst with very high activity and stereospecificity together with high bulk density. Typical bulk densities were increased from 25 $lbs/ft^3$ (40$kg/m^3$) to 28-30 $lbs/ft^3$ (450-482 $kg/m^3$). To form a suitable catalyst component, the reprecipitated solid described above is treated with a Ti(IV) species in the presence of an electron donor. It has been found that the best catalyst is formed by a two-stage treatment in which

the reprecipitated solid first is treated with a Ti(IV) species, then the resulting solid is retreated with a mixture of Ti species and an electron donor.

Catalyst components of this invention may, as indicated, be prepared by precipitating a first solid material from a hydrocarbon medium by treating a magnesium carbonate or carboxylate composition with titanium tetrachloride in the presence of an organosilane compound. The first precipitated solid may then be reprecipitated from a medium containing a cyclic ether such as tetrahydrofuran (THF) to form uniform solid particles. The resulting particles may be retreated with a suitable Ti(IV) compound and a suitable electron donor to form an olefin polymerization catalyst! component. Preferably, the reprecipitated solid particles are first treated with a Ti(IV) compound in a diluent and then retreated with a Ti(IV) compound and an electron donor. Such component may be combined with a suitable aluminum alkyl compound together with suitable modifier compounds to form a catalyst system useful to polymerize olefins, especially propylene. Using the catalyst of this invention, polymer particles with a narrow particle size distribution in high yield and stereospecificity may be obtained.

Soluble magnesium carbonates and carbonxylates useful in this invention include those described in U.S. Patent 4,540,679 and U.S. Application S.N. 741,858, filed June 6, 1985, (now US Patent No. 4612299), Typically, magnesium carbonate and carboxylate solutions.are formed in a suitable diluent by treating a magnesium compound with carbon dioxide, preferably in the presence of a suitable solvating agent such as an alcohol. For example, magnesium hydrocarbyl carbonate solutions can be formed by suspending magnesium alkoxide, such as magnesium ethoxide, in an alcohol medium and adding carbon dioxide until the magnesium ethoxide dissolves to form magnesium ethyl carbonate. Also, magnesium alkoxide solution with an alcohol can be used.

Specific examples of magnesium alcoholates which are useful according to this invention include $Mg(OCH_3)_2$, $Mg(OC_2H_5)_2$, $Mg(OC_4H_9)_2$, $Mg(OC_6H_5)_2$, $Mg(OC_6H_{13})_2$, $Mg(OC_9H_{19})_2$, $Mg(OC_{10}H_7)_2$, $Mg(OC_{12}H_9)_2$, $Mg(OC_{12}H_{25})_2$, $Mg(OC_{16}H_{33})_2$, $Mg(OC_{20}H_{41})_2$, $Mg(OCH_3)(OC_2H_5)$, $Mg(OCH_3)(OC_6H_{13})$, $Mg(OC_2H_5)(OC_8H_{17})$, $Mg(OC_6H_{13})(OC_{20}H_{41})$, $Mg(OC_3H_7)(OC_{10}H_7)$, $Mg(OC_2H_4Cl)_2$ and $Mg(OC_{16}H_{33})(OC_{18}H_{37})$. Mixtures of magnesium alcoholates also can be employed if desired. In addition, mixtures of magnesium alcoholates with other alkali earth metal alkoxides, alkali metal . alkoxides, minor amounts of other suitable metal salts such as alcoholates of lanthanum and the lanthanide metals, magnesium halides, hydroxyhalides, carboxylates, and so forth, can be used. Magnesium hydrocarbyl alcoholates are functional equivalents of the magnesium alcoholates when alcohol is used as the suspending medium for the reaction with carbon dioxide since the magnesium hydrocarbyl alcoholates are converted to Mg(OR)(OR′) in alcohol. Corresponding Mn(II) and Fe(II) compounds, such as $Mn(OCH_3)_2$ and $Fe(OCH_3)_2$, are considered equivalent to Mg(II) compounds.

In inert suspending medium the magnesium hydrocarbyl alcoholates are converted into magnesium hydrocarbyl carbonate salts on the addition of carbon dioxide. Spherical forms of magnesium alkoxides can be used, if desired, particularly when an alcoholic medium is not employed for the carbonation step. Reaction of a magnesium alcoholates compound with carbon dioxide can be represented as follows:

$$\text{R-MgOR} \quad + \quad CO_2 \quad \text{---->} \quad \text{R-Mg-O-}\overset{\overset{\text{O}}{\|}}{\text{C}}\text{-O-R}$$

where R is a hydrocarbyl group of 1 to 20 carbon atoms.

Alternatively, a solution of a hydrocarbyl magnesium compound with carbon dioxide may be used in this invention. Reaction of hydrocarbyl magnesium compound with carbon dioxide to form a magnesium carboxylate can be represented as follows:

$$\text{-MgR} \quad + \quad CO_2 \quad \text{---->} \quad \text{-Mg-O-}\overset{\overset{\text{O}}{\|}}{\text{C}} \text{ - R}$$

where R is a hydrocarbyl group of 1 to 20 carbon atoms. It has been found that sulfur dioxide can be substituted for carbon dioxide in forming ,magnesium hydrocarbyl sulfites. The latter can be substituted for magnesium hydrocarbyl carbonates.

Hydrocarbyl magnesium compounds useful in this invention have the structure R-Mg-Q wherein Q is hydrogen halogen or R′ (each R′ is independently a hydrocarbyl group of 1 to 20 carbon atoms.) Specific examples of hydrocarbyl magnesium compounds useful in this invention include:
$Mg(CH_3)_2$, $Mg(C_2H_5)_2$, $Mg(C_4H_9)_2$, $Mg(C_6H_5)_2$, $Mg(C_6H_{13})_2$, $Mg(C_9H_{19})_2$, $Mg(C_{10}H_7)_2$, $Mg(C_{12}H_9)_2$, $Mg(C_{12}H_{25})_2$, $Mg(C_{16}H_{33})_2$, $Mg(C_{20}H_{41})_2$, $Mg(CH_3)(C_2H_5)$, $Mg(CH_3)(C_6H_{13})$, $Mg(C_2H_5)(C_8H_{17})$, $Mg(C_6H_{13})(C_{20}H_{41})$, $Mg(C_3H_7)(C_{10}H_7)$, $Mg(C_2H_4Cl)_2$ and $Mg(C_{16}H_{33})(C_{18}H_{37})$, $Mg(C_2H_5)(H)$, $Mg(C_2H_5)(Cl)$ and $Mg(C_2H_5)(Br)$. Mixtures of hydrocarbyl magnesium compounds also can be employed if desired.

Dihydrocarbyl magnesium compounds preferred for use in this invention are those of the formula $Mg(R')_2$ wherein R′ is as defined above. In terms of catalytic activity and stereospecificity, best results are achieved through the use of hydrocarbyl magnesium halide compounds of the formula $Mg(R')Q'$ wherein R′ is an alkyl radical of 1 to 18 carbon atoms, an aryl radical of 6 to 12 carbon atoms or an alkaryl or aralkyl radical of 7 to 12 carbon atoms and Q′ is chloride or bromide.

Alcohols useful in solvating magnesium carbonate and carboxylates include those having the structure HOR wherein R′ is an alkyl radical of 1 to 18 carbon atoms, an aryl radical of 6 to 12 carbon atoms or an alkaryl or aralkyl radical of 7 to 12 carbon atoms. Typically, one or more alcohols containing from 1 to 12 carbon atoms can be used such as methanol, ethanol, propanol, isopropanol, tert-butyl alcohol, cyclohexanol, 2-ethylhexanol and dodecanol. Of these, 2-ethyl-1-hexanol is preferred.

In this invention, a magnesium hydrocarbyl carbonate solution is treated with titanium tetrachloride and an organosilane.

It has been found that incorporation of suitable organosilanes is useful in preparing solid catalyst components with acceptable morphology, i.e., with particle distributions not containing excessive amounts of fines or large particles. Suitable organosilanes useful as reagents in precipitating a solid from a soluble magnesium species according to this invention have a formula: $R_nSiR'_{4-n}$, wherein n = 0 to 4 and wherein R is hydrogen or an alkyl, haloalkyl or aryl radical containing one to ten carbon atoms or a halosilyl radical or haloalkylsilyl radical containing one to eight carbon atoms, and R′ is OR or a halogen. Typically, R is an alkyl or chloroalkyl radical containing one to eight carbon atoms and one to four chlorine atoms, and R′ is chlorine or an -OR radical containing one to four carbon atoms. A suitable organosilane may contain different R′ groups. Mixtures of organosilanes may be used. Preferable organosilanes include trimethylchlorosilane, trimethylethoxysilane, dimethyldichlorosilane and tetraethoxysilane.

In preparation of the stereospecific supported catalyst components of this invention, typically, the soluble magnesium-containing species, titanium(IV) halide component an organosilane component are contacted in amounts such that the atomic ratio of magnesium to titanium is at least 0.3:1 and preferably, is from 0.4:1 to 20:1 and more preferably, from 0.5:1 to about 3:1. The Si/Ti atomic ratio typically can range from 0.1:1 to 2.0:1 and preferably is 0.3:1 to 1:1.

In another aspect of this invention, the first precipitated solid may be reprecipitated from a solution containing a cyclic ether. In a typical reprecipitation procedure, the first solid is entirely solubilized in the cyclic ether solvent and then solid is allowed to reprecipitate to form particles of uniform size. The preferable ether is tetrahydrofuran, although other suitable cyclic ethers, such as tetrahydropyran and 2-methyltetrahydrofuran, may be used, which can solubilize the first solid material. Also, thioethers such as tetrahydrothiophene can be used. In some instances, such as the use of 2,2,5,5-tetrahydrofuran and tetrahydropyran-2-methanol reprecipitation occurs upon heating to 130-185°F (54-85°C). Other compounds may be used which act in an equivalent manner, i.e., materials which can solubilize the first solid and from which solid uniform particles can be reprecipitated, such as cyclohexene oxide, cyclohexanone, ethyl acetate and phenyl acetate. Mixtures of suitable materials may be used.

In another aspect of this invention, the reprecipitated solid may be treated with a titanium (IV) compound in the presence of a suitable electron donor. The preferable procedure is a two-step method by which the reprecipitated solid is treated first with a Ti(IV) component and then with the Ti(IV) component combined with a suitable electron donor. Although, typically, solid is separated.from the first Ti(IV)-containing solution before a second treatment with Ti(IV) component and electron donor, an alternative procedure can be to react the reprecipitated solid with Ti(IV) compound and then add the electron donor.

Organic electron donors useful in preparation of stereospecific supported catalyst components many times can be organic compounds containing one or more atoms of oxygen, nitrogen, sulfur, and phosphorus. Such compounds include organic acids, organic acid esters, alcohols, ethers, aldehydes, ketones, amines, amine oxides, amides, thiols and various phosphorous acid esters and amides. Mixtures of organic electron donors can be used if desired. Specific examples of useful oxygen-containing electron donor compounds include organic acids and esters. Useful organic acids contain from 1 to 20 carbon atoms and 1 to 4 carboxyl groups.

The preferred electron donor compounds include esters of aromatic acids. Preferred organic electron donors according to this invention are $C_1$-$C_6$ alkyl esters of aromatic mono- and dicarboxylic acids and halogen-, hydroxyl-, oxo-, alkyl-, alkoxy-, aryl-, and aryloxy-substituted aromatic mono- and dicarboxylic acids. Among these, the alkyl esters of benzoic and halobenzoic acids wherein the alkyl group contains 1

to 6 carbon atoms, such as methyl benzoate, methyl bromobenzoate, ethyl benzoate, ethyl chlorobenzoate, ethyl bromobenzoate, butyl benzoate, isobutyl benzoate, hexyl benzoate, and cyclohexyl benzoate, are preferred. Other preferable esters include ethyl p-anisate and methyl-p-toluate. An especially preferred aromatic ester is a dialkylphthalate ester in which the alkyl group contains from two to ten carbon atoms. Examples of preferred phthalate ester are diisobutylphthalate, diethylphthalate, ethylbutlphthalate, and di-n-butylphthalate.

The electron donor component used in preparation of the solid catalyst component is preferably used in an amount ranging from 0.001 to 1.0 mole per gram atom of titanium, and more preferably from 0.005 to 0.8 mole per gram atom. Best results are achieved when this ratio ranges from 0.01 to 0.6 mole per gram atom of titanium.

Due to the sensitivity of catalyst components to catalyst poisons such as water, oxygen, and carbon oxides, the catalyst components moved normally be prepared in the substantial absence of such materials. Catalyst poisons can be excluded by carrying out the preparation under an atmosphere of an inert gas such as nitrogen or argon, or an atmosphere of alpha-olefin. As noted above, purification of any diluent to be employed also aids in removing poisons from the preparative system.

As a result of the above-described preparation there is obtained a solid reaction product suitable for use as a catalyst component. Prior to such use, it is desirable to remove incompletely-reacted starting materials from the solid reaction product. This is conveniently accomplished by washing the solid, after separation from any preparative diluent, with a suitable solvent, such as a liquid hydrocarbon or chlorocarbon, preferably within a short time after completion of the preparative reaction because prolonged contact between the catalyst component and unreacted starting materials may adversely affect catalyst component performance.

Although not required, the solid reaction product prepared as described herein may be contacted with at least one liquid Lewis acid prior to polymerization. Such Lewis acids useful according to this invention are materials which are liquid at treatment temperatures and have a Lewis acidity high enough to remove impurities such as unreacted starting materials and poorly affixed compounds. from the surface of the above-described solid reaction product. Preferred Lewis acids include halides of Group III-V metals which are in the liquid state at temperatures up to 170°C. Specific examples of such materials include $BCl_3$, $AlBr_3$, $TiCl_4$, $TiBr_4$, $SiCl_4$, $GeCl_4$, $SnCl_4$, $PCl_3$ and $SbCl_5$. Preferable Lewis acids are $TiCl_4$ and $SiCl_4$. Mixtures of Lewis acids can be employed if desired. Such Lewis acid may be used in a compatible diluent.

Although not required, the above-described solid reaction product may be washed with.an inert liquid hydrocarbon or halogenated hydrocarbon before contact with a Lewis acid. If such a wash is conducted it is preferred to substantially remove the inert liquid prior to contacting the washed solid with Lewis acid.

Although the chemical structure of the catalyst components described herein is not presently known, the components preferably contain from 1 to 6 wt.% titanium, from 10 to 25 wt.% magnesium, and from 45 to 65 wt.% halogen. Preferred catalyst components made according to this invention contain from 1.0 to 3 wt.% titanium, from 15 to 21 wt.% magnesium and from about 55 to about 65 wt.% chlorine.

One unusual aspect of the titanium-containing component particles prepared according to the preferred method of this invention is that the particles have a cubic shape.

The titanium-containing catalyst component of this invention may be prepolymerized with an alpha-olefin before use as a polymerization catalyst component. In prepolymerization, catalyst and an organoaluminum compound cocatalyst such as triethylaluminum are contacted with an alpha-olefin such as propylene under polymerization conditions, preferably in the presence of a modifier such as a silane and in an inert hydrocarbon such as hexane. Typically, the polymer/catalyst weight ratio of the resulting prepolymerized component is 0.1:1 to 20:1. Prepolymerization forms a coat of polymer around catalyst. particles which in many instances improves particle morphology, activity, stereospecificity, and attrition resistance. A particularly useful prepolymerization procedure is described in U.S. Patent 4,579,836.

The titanium-containing catalyst component of this invention is used in a polymerization catalyst containing a cocatalyst component including a Group II or III metal alkyl and, typically, one or more modifier compounds.

Useful Group II and IIIA metal alkyls are compounds of the formula $MR_m$ wherein M is a Group II or IIIA metal, each R is independently an alkyl radical of 1 to 20 carbon atoms, and m corresponds to the valence of M. Examples of useful metals, M, include magnesium, calcium, zinc, cadmium, aluminum, and gallium. Examples of suitable alkyl radicals, R, include methyl, ethyl, butyl, hexyl, decyl, tetradecyl, and eicosyl.

From the standpoint of catalyst component performance, preferred Group II and IIIA metal alkyls are those of magnesium, zinc, and aluminum wherein the alkyl radicals contain 1 to 12 carbon atoms. Specific examples of such compounds include $Mg(CH_3)_2$, $Mg(C_2H_5)_2$, $Mg(C_2H_5)(C_4H_9)$, $Mg(C_4H_9)_2$, $Mg(C_6H_{13})_2$, $Mg(C_{12}H_{25})_2$, $Zn(CH_3)_2$, $Zn(C_2H_5)_2$, $Zn(C_4H_9)_2$, $Zn(C_4H_9)(C_8H_{17})$, $Zn(C_6H_{13})_2$, $Zn(C_{12}H_{25})_2$, $Al(CH_3)_3$, $Al(C_2H_5)_3$, $Al(C_3H_7)_3$, $Al(C_4H_9)_3$, $Al(C_6H_{13})_3$, and $Al(C_{12}H_{25})_3$. More preferably a magnesium, zinc, or aluminum alkyl containing 1 to 6 carbon atoms per alkyl-radical is used. Best results are achieved through the use of trialkylaluminums containing 1 to 6 carbon atoms per alkyl radical, and particularly triethylaluminum and triisobutylaluminum or a combination thereof.

If desired, metal alkyls having one or more halogen or hydride groups can be employed, such as ethylaluminum dichloride, diethylaluminum chloride, ethylaluminum sesquichloride and diisobutylaluminum hydride.

A typical catalyst composition is formed by combining the supported titanium-containing compound described in this invention and an alkyl aluminum compound together with modifiers including an electron donor and, preferably, a silane. Typically, useful aluminum-to-titanium atomic ratios in such catalyst formulations are 10 to 500 and preferably 30 to 300. Typical aluminum compound-to-electron donor molar ratios are 5 to 40. Typical aluminum-to-silane compound molar ratios are 8 to 30.

To maximize catalyst activity and stereospecificity, it is preferred to incorporate one or more modifiers, typically electron donors, and including compounds such as silanes, mineral acids, organometallic chalcogenide derivatives of hydrogen sulfide, organic acids, organic acid esters and mixtures thereof.

Organic electron donors useful as cocatalyst modifiers useful in this invention are organic compounds containing oxygen, silicon, nitrogen, sulfur, and/or . phosphorus. Such compounds include organic acids, organic acid anhydrides, organic acid esters, alcohols, ethers, aldehydes, ketones, silanes, amines, amine oxides, amides, thiols, various phosphorus acid esters and amides. Mixtures of organic electron donors can be employed if desired.

Preferred organic acids and esters are benzoic acid, halobenzoic acids, phthalic acid, isophthalic acid, terephthalic acid, and the alkyl esters thereof wherein the alkyl group contains 1 to 6 carbon atoms such as methyl benzoate, methyl bromobenzoates, ethyl benzoate, ethyl chlorobenzoates, butyl benzoate, isobutyl benzoate,, methyl anisate, ethyl anisate, methyl p-toluate, hexyl benzoate, and cyclohexyl benzoate, and diisobutyl phthalate as these give good results in terms of activity and stereospecificity and are convenient to use.

The polymerization cocatalyst useful in this invention advantageously contains an aliphatic or aromatic silane modifier. Preferable silanes useful in cocatalysts in this invention include alkyl-, aryl-, and/or alkoxy-substituted silanes containing hydrocarbon moieties with one to 20 carbon atoms. Especially preferred are silanes having a formula: $SiR_4$, wherein R is independently R′ or OR′ with R′ having 1 to 20 carbon atoms. Preferred aromatic silanes include diphenyldimethoxysilane, phenyltrimethoxysilane, phenylethyldimethoxysilane and methylphenyldimethoxysilane. Preferred aliphatic silanes include isobutyltrimethoxysilane, diisobutyldimethoxysilane, diisopropyldimethoxysilane, di-t-butyldimethoxysilane, and t-butyltrimethoxysilane.

The above-described catalysts of this invention are useful in polymerization of alpha-olefins such as ethylene and propylene, and are most useful in stereospecific polymerization of alpha-olefins containing 3 or more carbon atoms such as propylene, butene-1, pentene-1, 4-methylpentene-1, and hexene-1, as well as mixtures thereof and mixtures thereof with ethylene. The invented catalysts are particularly effective in the stereospecific polymerization of propylene or mixtures thereof with up to 20 mole % ethylene or a higher alpha-olefin. Propylene homopolymerization is most preferred. According to the invention, highly crystalline polyalpha-olefins are prepared by contacting at least one alpha-olefin with the above-described catalyst compositions under polymerizing conditions. Such conditions include polymerization temperature and time, monomer pressure, avoidance of.contamination of catalyst, choice of polymerization medium in slurry processes, the use of additives to control polymer molecular weights, and other conditions well known to persons of skill in the art. Slurry-, bulk-, and vapor-phase polymerization processes are contemplated herein.

The amount of catalyst to be employed varies depending on choice of polymerization technique, reactor size, monomer to be polymerized, and other factors known to persons of skill in the art, and can be determined on the basis of the examples appearing hereinafter. Typically, catalysts of this invention are used in amounts ranging from 0.2 to 0.02 milligrams of catalyst to gram of polymer produced.

Irrespective of the polymerization process employed, polymerization should be carried out at temperatures sufficiently high to ensure reasonable polymerization rates and avoid unduly long reactor residence times, but not so high as to result in the production of unreasonably high levels of stereorandom products due.to excessively rapid polymerization rates. Generally, temperatures range from 0° to 120°C with 20° to 95°C being preferred from the standpoint of attaining good catalyst performance and high production rates. More preferably, polymerization according to this invention is carried out at temperatures ranging from 50° to 80°C.

Alpha-olefin polymerization according to this invention is carried out at monomer pressures of atmospheric or above. Generally, monomer pressures range from 20 to 600 psi (138-4136 kPa), although in vapor phase polymerizations, monomer pressures should not be below the vapor pressure at the polymerization temperature of the alpha-olefin to be polymerized.

The polymerization time will generally range from 1/2 to several hours in batch processes with corresponding average residence times in continuous processes. Polymerization times ranging from 1 to 4 hours are typical in autoclave-type reactions. In slurry processes, the polymerization time can be regulated as desired. Polymerization times ranging from 1/2 to several hours are generally sufficient in continuous slurry processes.

Diluents suitable for use in slurry polymerization processes include alkanes and cycloalkanes such as pentane, hexane, heptane, n-octane, isooctane, cyclohexane, and methylcyclohexane; alkylaromatics such as toluene, xylene, ethylbenzene, isopropylbenzene, ethyl toluene, n-propyl-benzene, diethylbenzenes, and mono- and dialkylnaphthalenes; halogenated and hydrogenated aromatics such as chlorobenzene, chloronaphthalene, ortho-dichlorobenzene, tetrahydronaphthalene, decahydronaphthalene; high molecular weight liquid paraffins or mixtures thereof, and other well-known diluents. It often is desirable to purify the polymerization medium prior to use, such as by distillation, percolation through molecular sieves, contacting with a compound such as an alkylaluminum compound capable of removing trace impurities, or by other suitable means.

Examples of gas-phase polymerization processes in which the catalyst of this invention is useful include both stirred bed reactors and.fluidized bed reactor systems and are described in U.S. Patents 3,957,448; 3,965,083; 3,971,768; 3,970,611; 4,129,701; 4,101,289; 3,652,527; and 4,003,712. Typical gas phase olefin polymerization reactor systems comprise a reactor vessel to which olefin monomer, and catalyst components can be added and which contain an agitated bed of forming polymer particles. Typically, catalyst components are added together or separately through one or more valve-controlled ports in the reactor vessel. Olefin monomer, typically, is provided to the reactor through a recycle gas system in which unreacted monomer removed as off-gas and fresh feed monomer are mixed and injected into the reactor vessel. A quench liquid which can be liquid monomer, can be added to polymerizing olefin through the recycle gas system in order to control temperature.

Irrespective of polymerization technique, polymerization is carried out under conditions that exclude oxygen, water, and other materials that act as catalyst poisons.

Also, according to this invention, polymerization can be carried out in the presence of additives to control polymer molecular weights. Hydrogen is typically employed for this purpose in a manner well known to persons of skill in the art.

Although not usually required, upon completion of polymerization, or when it is desired to terminate polymerization or deactivate the catalysts of this invention, the catalyst can be contacted with water, alcohols, acetone, or other suitable catalyst deactivators in a manner known to persons of skill in the art.

The products produced using catalysts of this invention are normally solid, predominantly isotactic polyalpha-olefins. Polymer yields are sufficiently high relative to the amount of catalyst employed so that useful products can be obtained without separation of catalyst residues. Further, levels of stereorandom by-products are sufficiently low so that useful products can be obtained without separation thereof. The polymeric products produced in the presence of the invented catalysts can be fabricated into useful articles by extrusion, injection molding, and other common techniques.

The invention described herein is illustrated, but not limited, by the following Examples and Comparative Runs.

Example 1

Under a dry nitrogen atmosphere, a 450-milliliter pressure bottle with a a magnetic stirring bar was charged with 11.25 grams of magnesium ethoxide. After the bottle was capped with a rubber septum, 120 milliliters of toluene and 20 milliliters of 2-ethyl-1-hexanol were added by syringe. A pressure of 25 psig (172 kPa) of carbon dioxide was added through the syringe needle and the resulting mixture was stirred under carbon dioxide pressure for about 16 hours. After carbon dioxide was vented, hexane was added to the bottle until the total volume was 300 milliliters and the contents were kept under nitrogen atmosphere (Solution A). A 500-milliliter resin kettle fitted with a a 125-milliliter dropping funnel was purged with dry nitrogen and filled with 50 milliliters toluene, 5.6 milliliters titanium tetrachloride, and 13.6 milliliters trimethylchlorosilane. The resulting bright orange solution (Solution B) was stirred briefly with a glass rod.

The 500-milliliter resin kettle fitted with a dropping funnel also was fitted with a mechanical stirrer and temperature probe. After the kettle was purged with dry nitrogen, 100 milliliters of Solution A was added using a cannula. The orange Solution B then was added with stirring at 450 rpm over 35-60 minutes. The resulting solution turned.opalescent, then white, and finally slightly yellow. When the addition was complete, stirring continued for one hour at 60°C at 450 rpm. After heating was stopped and a solid was allowed to settle, supernatant was decanted. The solid was washed three times with 75-milliliter portions of toluene and twice with 100-milliliter portions of hexane. The washed solid was filtered and dried. The yield was 3.5 grams.

To the resin kettle, equipped with a mechanical stirrer, was added the dried solid, 150 milliliters of chlorobenzene, and 50 milliliters of titanium tetrachloride. While the resulting mixture was stirring at 450 rpm, 1.3 milliliters of diisobutylphthalate was added dropwise. The temperature was increased and the mixture refluxed at 130°C for 90 minutes. Heating was stopped and the mixture was stirred for about three minutes and then

allowed to settle for about five minutes. The warm supernatant was decanted and the remaining solid was washed three times with 75-milliliter portions of toluene and twice with 100-milliliter portions of hexane. The resulting solid (2.2 grams) was filtered and dried. Slurry polymerization tests were performed using the solid catalyst component as follows: A two-liter Parr reactor was charged with 650 milliliters of hexane, 150 psig (1.034 Mpa) of propylene, and 4 psig (27.6 kPa) of hydrogen. About 15 milligrams of titanium-containing catalyst component together with a triethylaluminum (TEA)-based cocatalyst system including diphenyldimethoxysilane (DPDMSi) were used in the polymerization test run for two hours at 71°C. Results are shown in Table I.

Runs F and G

A catalyst component (Run F) was prepared in a manner similar to that described in Example 1, except Solution B contained 39.0 milliliters of trimethylchlorosilane and 50 milliliters of toluene. Another catalyst component (Run G) was prepared in a manner similar to that described in Example 1, except Solution B contained 8.44 milliliters of titanium tetrachloride and 50 milliliters of toluene. Slurry polymerization tests as described in Example 1 were performed using the solid catalyst component. Results are shown in Table I.

Table I

Slurry Polymerization Performance

| Example (Run) | Cocatalyst System[1] | Yield (g/g) | Extractables (wt.%) | Hexane Solubles (wt.%) | Bulk Density (lbs/ft$^3$) (Kg/m$^3$) |
|---|---|---|---|---|---|
| 1 | a | 12,300 | 1.2 | 0.5 | 22 (35.2) |
| 1 | b | 11,500 | 1.3 | 1.0 | 23 (36.8) |
| F | a | 4,000 | - | 2.0 | -- |
| F | b | 3,100 | 7.6 | 6.5 | -- |
| G | b | 11,900 | 0.8 | 0.6 | 21 (33.6) |

[1]Cocatalyst Systems

Molar Ratios:

a: TEA/DPDMSi = 10/1 Al/Ti > 450/1

b: TEA/DPDMSi = 20/1 Al/Ti > 450/1

Example 2

A catalyst component was prepared by a procedure similar to that described in Example 1 using sulfur dioxide instead of carbon dioxide. Propylene was polymerized using the batch gas phase technique described for Examples 1-9 except that a molar ratio of components of TEA/DPDMSi/Ti = 100/10/1. The results were: Yield = 8,500 g/g; Extractables = 1.3%; Bulk Density = 27.7 lbs/ft$^3$ 44.32 kg/m$^3$; MFR = 2.2.

## Claims

1. A solid, hydrocarbon-insoluble alpha-olefin polymerization catalyst component which comprises a product formed by precipitating solid particles from a magnesium.hydrocarbyl carbonate solution in an alcohol by treatment with titanium tetrachloride and an organosilane and treating the resulting solid particles with titanium tetrachloride and an electron donor.

2. The catalyst component of Claim 1 wherein the magnesium hydrocarbyl carbonate solution is formed from a magnesium alkoxide and carbon dioxide.

3. The catalyst component of Claim 2 wherein the magnesium hydrocarbyl carbonate solution is formed from magnesium ethoxide and carbon dioxide in 2-ethylhexanol.

4. The catalyst component of Claim 1 wherein a product of a magnesium alkoxide and sulfur dioxide is used in lieu of a magnesium hydrocarbyl carbonate.

5. The catalyst component of any preceding claim wherein the organosilane has the formula $R_nSiR'_{4-n}$, wherein n =0 to 4 and wherein R is hydrogen or an alkyl, a haloalkyl or aryl radical containing one to ten carbon atoms, or a halosilyl radical or haloalkylsilyl radical containing one to eight carbon atoms, and R′ is OR or a halogen.

6. The catalyst component of Claim 5 wherein the organosilane is trimethylchlorosilane, dimethyldichlorosilane or tetraethoxysilane.

7. The catalyst component of any preceding claim wherein the electron donor is a dialkylphthalate ester.

8. The catalyst component of Claim 7 wherein the electron donor is diisobutylphthalate, diethylphthalate, or di-n-butylphthalate.

9. An alpha-olefin polymerization catalyst comprising the solid component of any preceding claim, an alkylaluminum compound, and an organosilane.

**Patentansprüche**

1. Feste, in Kohlenwasserstoffen unlösliche Alpha-Olefinpolymerisationskatalysator-Komponente, die ein Produkt umfaßt, das durch Ausfällen fester Teilchen aus einer Magnesiumhydrocarbylcarbonat-Lösung in einem Alkohol durch Behandlung mit Titantetrachlorid und einem Organosilan und Behandeln der resultierenden festen Teichen mit Titantetrachlorid und einem Elektronendonor gebildet wird.

2. Katalysatorkomponente nach Anspruch 1, worin die Magnesiumhydrocarbylcarbonat-Lösung aus einem Magnesiumalkoxid und Kohlendioxid gebildet wird.

3. Katalysatorkomponente nach Anspruch 2, worin die Magnesiumhydrocarbylcarbonat-Lösung aus Magnesiumethoxid und Kohlendioxid in 2-Ethylhexanol gebildet wird.

4. Katalysatorkomponente nach Anspruch 1, worin anstelle eines Magnesiumhydrocarbylcarbonats ein Produkt eines Magnesiumalkoxids und Schwefeldioxid verwendet wird.

5. Katalysatorkomponente nach irgendeinem der vorhergehenden Ansprüche, worin das Organosilan die Formal $R_nSiR'_{4-n}$, besitzt, worin n = 0 bis 4 und R gleich Wasserstoff oder ein Alkyl-, ein Haloalkyl- oder ein Arylrest mit 1 bis 10 Kohlenstoffatomen ist, oder ein Halosilylrest oder ein Haloalkylsilylrest mit 1 bis 8 Kohlenstoffatomen und worin R′OR oder ein Halogen bedeutet.

6. Katalysatorkomponente nach Anspruch 5, worin das Organosilan Trimethylchlorsilan, Dimethyldichlorsilan oder Tetraethoxysilan ist.

7. Katalysatorkomponente nach irgendeinem der vorangegangenen Ansprüche, worin der Elektronendonor ein Dialkylphthalatester ist.

8. Katalysatorkomponente nach Anspruch 7, worin der Elektronendonor Diisobutylphthalat, Diethylphthalat oder Di-n-butylphthalat ist.

9. Alpha-Olefinpolymerisationskatalysator, der die feste Komponente nach irgendeinem der vorangegangenen Ansprüche, eine Alkylaluminiumverbindung und ein Organosilan umfaßt.

## Revendications

1. Constituant de catalyseur, insoluble dans les hydrocarbures et solide, de polymérisation d'alpha-oléfines, qui comprend un produit formé par la précipitation de particules solides obtenues à partir d'une solution de carbonate d'alkyl ou aryl magnésium dans un alcool, par traitement avec du tétrachlorure de titane et un organosilane et traitement des particules solides résultantes par du tétrachlorure de titane et un donneur d'électrons.

2. Constituant de catalyseur selon la revendication 1, dans lequel la solution de carbonate d'alkyl magnésium est formée à partir d'un alcoolate de magnésium et d'anhydride carbonique.

3. Constituant de catalyseur selon la revendication 2, dans lequel la solution de carbonate d'alkyl magnésium est formée à partir d'éthylate de magnésium et d'anhydride carbonique dans du 2-éthylhexanol.

4. Constituant de catalyseur selon la revendication 1, dans lequel un produit de la réaction d'un alcoolate de magnésium et d'anhydride sulfureux est utilisé au lieu de carbonate d'alkyl ou d'aryl.

5. Constituant de catalyseur selon l'une quelconque des revendications précédentes, dans lequel l'organosilane a pour formule $R_nSiR'_{4-n}$, dans laquelle n vaut 0 à 4 ; R représente un atome d'hydrogène ou un radical alkyle, halogénoalkyle ou aryle, contenant un à dix atomes de carbone, ou un radical halogénosilyle ou halogénoalkylsilyle contenant un à huit atomes de carbone, et R' représente OR ou un halogène.

6. Constituant de catalyseur selon la revendication 5, dans lequel l'organosilane est le triméthylchlorosilane, le diméthyldichlorosilane ou le tétraéthoxysilane.

7. Constituant de catalyseur selon l'une quelconque des revendications précédentes, dans lequel le donneur d'électrons est un phtalate de dialkyle.

8. Constituant de catalyseur selon la revendication 7, dans lequel le donneur d'électrons est le phtalate de diisobutyle, le phtalate de diéthyle ou le phtalate de di-n-butyle.

9. Catalyseur de polymérisation d'alpha-oléfines comprenant le constituant solide selon l'une quelconque des revendications précédentes, un composé d'alkyl aluminium et un organosilane.